# EUROPÄISCHE PATENTSCHRIFT

(11) **EP 2 312 250 B1**
(45) Veröffentlichungstag und Bekanntmachung des Hinweises auf die Patenterteilung: **06.03.2013**
(21) Anmeldenummer: 10010832.3
(22) Anmeldetag: 27.09.2010
(51) Int. Cl.: F27D 1/12, F27D 19/00, F27D 21/00, G01D 5/26, F27B 3/28, F27B 14/20

(54) **Metallurgisches Gefäß**
Metallurgical container
Récipient métallurgique

(30) Priorität: 30.09.2009 DE 102009043540; 18.02.2010 DE 102010008481
(43) Veröffentlichungstag der Anmeldung: 20.04.2011
(73) Patentinhaber: SMS Siemag Aktiengesellschaft, 40237 Düsseldorf (DE)
(72) Erfinder: Falkenreck, Udo, 44797 Bochum (DE); Lieftucht, Dirk, 48739 Legden (DE); Uebber, Norbert, 40764 Langenfeld (DE); Weischedel, Walter, 40670 Meerbusch (DE)
(74) Vertreter: Klüppel, Walter

(56) Entgegenhaltungen:
- WO-A1-2009/156115
- WO-A2-2004/015349
- GB-A- 2 340 226
- JP-A- 7 311 098
- JP-A- 8 035 007
- JP-A- 11 323 425
- JP-A- 2000 356 473
- JP-A- 2004 138 500

## Beschreibung

Die Erfindung betrifft ein metallurgisches Gefäß, insbesondere einen Schmelzofen, das mindestens eine Wandung umfasst, wobei die Wandung eine dem Inneren des Gefäßes zugewandte Heißseite sowie eine dem Äußeren des Gefäßes zugewandte Kaltseite umfasst, wobei zwischen der Heißseite und der Kaltseite ein von einem Kühlmittel zumindest teilweise durchströmter Raum angeordnet ist und wobei die Wandung zumindest ein Sensorelement umfasst, mit dem die Temperatur mindestens einer Stelle der Wandung ermittelt werden kann.

Metallurgische Gefäße in Form von Schmelzöfen (beispielsweise ein Electrical Arc Furnace - EAF) sind mit Transformatoren ausgestattet, die eine hohe Energiedichte erlauben, um durch kurze Abstichfolgen eine hohe Produktivität bei minimierten Energieverlusten darzustellen. Der angestrebte Betrag der Energie, die in den Schmelzofen eingebracht werden soll, wird am Stufenschalter des Transformators vorgewählt, um im zugelassenen Arbeitsfenster eine hohe Wirkleistung zu erzielen.

Um diese Technologie beherrschen zu können, sind die Wände und Deckel der Schmelzöfen wassergekühlt. Als Standard hat sich dabei eine flächendeckende Rohrkonstruktion mit senkrecht oder waagrecht verlaufenden Rohrbündeln durchgesetzt. Das Rohrmaterial ist auf Basis von Stahl oder von Kupfer ausgeführt. Die Ofenwandungen sind segmentiert und in einzelne Wasserkreise unterteilt (in sog. Ofenpanels), so dass diese bei Bedarf (z. B. im Falle von Undichtigkeiten) ausgetauscht werden können.

Eine solche Lösung ist in der EP 1 600 717 B1 beschrieben. Hier wird ein Kühlkörper für einen Elektroofen offenbart, bei dem zwischen einer Heißseite und einer Kaltseite ein Hohlraum angeordnet ist, der von Kühlwasser durchströmt werden kann. JP-A 2004 138500 betrifft eine Kokille zum Gießen von Metall mit einer Mehrzahl von Temperaturmesseinrichtungen, die in einer Wand der Kokille angeordnet sind.

Nachteilig ist, dass durch die vorgegebene bzw. benötigte Geometrie sowie durch andere Nebenbedingungen des Schmelzofens die einzelnen Abschnitte (Panels) des Ofens über die Prozesszeit energetisch unterschiedlich beaufschlagt werden, so dass heiße Bereiche (sog. "hot spots") und kalte Bereiche (sog. "cold spots") in den Wänden des Ofens zu finden sind.

Zur Überwachung der Temperaturen der Wände werden Temperatursensoren eingesetzt. Die Überwachung eines Panels erfolgt dabei zumeist über die Messung der Kühlwassertemperaturen, die dafür verantwortlich sind, dass bei der Überschreitung eines oberen Grenzwertes die Energiezufuhr in den Schmelzofen verringert oder unterbrochen wird. Diese Vorgehensweise der Temperaturmessung ist freilich relativ träge und reagiert auf schnelle Temperaturwechsel nur unzureichend. Eine Dauermessung zur Rückkopplung auf die Prozessleitgrößen ist daher falls überhaupt nur mit besonderen Vorkehrungen möglich.

Der Einbau von Temperatursensoren in die Rohrzwischenräume führt zu dem Problem, dass die Spitzen der Thermoelemente gegen mechanische und chemische Beschädigungen während des Schmelzprozesses permanent geschützt werden müssen.

Der vorliegenden Erfindung liegt die Aufgabe zugrunde, ein metallurgisches Gefäß, insbesondere einen Schmelzofen, der eingangs genannten Art so auszustatten, dass eine kontinuierliche Überwachung der Temperaturen der Wandbereiche des Gefäßes zu deren Schutz problemlos und genau möglich ist, wobei die so ermittelten Temperaturen zur Rückkopplung für die Führung des Prozesses im metallurgischen Gefäß, insbesondere für die Führung des Schmelzprozesses, einsetzbar sein sollen. Demgemäß wird eine schnell und genau reagierende Messung der Ofenwandung angestrebt. Mit einer solchen kontinuierlichen Messung der Temperaturen soll also eine einfache und genaue Bestimmung der mechanischen und thermischen Belastung der maßgeblichen Bauteile des metallurgischen Gefäßes möglich sein und eine entsprechende Ableitung sekundärer Prozessgrößen, die zur Regelung der Leistung des Gefäßes sowie anderer Prozessbedingungen genutzt werden können.

Die Lösung dieser Aufgabe durch die Erfindung ist dadurch gekennzeichnet, dass das Sensorelement mindestens einen Lichtwellenleiter umfasst, der an der Heißseite der Wandung befestigt ist.

Die Heißseite umfasst dabei eine Platte aus Kupfer oder einer Kupferlegierung.

Der Lichtwellenleiter kann in Bohrungen in der Heißseite angeordnet sein.

Er kann auch in einer Nut in der Heißseite angeordnet sein, die nach seiner Platzierung wieder verschlossen wird.

Der Lichtwellenleiter ist weiterhin zumindest teilweise in einer Schicht angeordnet, die an der Heißseite angeordnet ist; dabei ist der Lichtwellenleiter bevorzugt vollständig vom Material der Schicht umgeben. Die Schicht ist galvanisch auf die Heißseite aufgebracht. Sie kann auf der dem Inneren des metallurgischen Gefäßes zugewandten Seite der Heißseite angeordnet sein.

Der Lichtwellenleiter kann auch in einem diesen umgebenden Rohr angeordnet sein.

Bei dem metallurgisches Gefäß ist insbesondere an einen Schmelzofen, speziell an einen Elektrolichtbogenofen, gedacht.

Besonders vorteilhaft ist es, wenn der mindestens eine Lichtwellenleiter mäanderförmig in der Heißseite der Wandung verlegt ist. Dann nämlich kann die Oberfläche der Wandung flächig hinsichtlich der Temperaturverteilung überwacht werden. Demgemäß wird damit die Bestimmung von Temperaturprofilen über die Oberfläche der Wandung möglich.

Eine weitere besonders bevorzugte Ausgestaltung der Erfindung stellt darauf ab, dass mindestens zwei parallel zueinander verlaufende Lichtwellenleiter in unterschiedlichen Abständen von der Oberfläche der Heißseite verlegt sind. Hiermit wird es möglich, durch die paarweise Verlegung der Lichtwellenleiter aufgrund des messbaren Temperaturgradienten die lokale Wärmestromtiefe zu berechnen.

Auf der Basis eines zweilagigen Kühlpanels für einen Schmelzofen wird es somit möglich, die der Schmelze (d. h. dem Inneren des Ofens) zugewandte Seite der Wandung zu instrumentieren, die durch Messungen gewonnenen Werte auf eine Auswerteeinheit zu übertragen und so permanent und kontinuierlich Signale zu erzeugen und zu verwerten, die den bisher bekannten Messungen überlegen sind und die es erlauben, direkt und ohne nennenswerten Zeitversatz Prozesskennwerte abzuleiten bzw. zu ermitteln.

Durch die Einbringung von Lichtwellenleitern in die Wandungen - den sog. Kupferstaves - eines metallurgischen Gefäßes, insbesondere eines Elektrolichtbogenofens, können Temperaturen als Profil über die Gefäßoberfläche erfasst werden. Ebenfalls erfasst werden dynamische Änderungen bedingt durch Strömungen der Schmelze. Hierdurch wird eine Beurteilung des Verschleißzustandes und der vorliegenden Strömungssituation möglich. Das vorgeschlagene Konzept ermöglicht eine Darstellung der thermischen Belastung der Bauteile über ihre Oberfläche im jeweiligen Betriebszustand. Zudem können die ermittelten Messwerte zur Prozessführung rückgeführt werden.

Ziel der Verlegung von Lichtwellenleitern in den Kupferstaves ist es also, insbesondere durch eine mäanderförmige Anordnung des Lichtwellenleiters in dem Kupferstave ein Temperaturprofil über die gesamte Kupferstaveoberfläche zu bestimmen. Auf diese Weise können heiße und kalte Zonen der Staveoberfläche bestimmt werden. Die heißen Zonen geben die gesuchte maximale Wärmebelastung des Kupferstaves wieder, wohingegen die kalten Zonen Temperaturen von durch Schlackeanhaftungen geschützten Staveoberflächen darstellen. Bei den vorbekannten Lösungen wird die Kupferstavetemperatur entweder über die Kühlwassertemperatur oder einzelne Thermoelemente bestimmt. Beide Lösungen schaffen es nicht, zuverlässig die gesuchte Temperatur der heißen Zone und damit die maximale Wärmebelastung abzubilden. Zur sicheren Bewertung dieser Wärmebelastung ist ebenso eine paarweise Verlegung von zwei oder mehreren Lichtwellenleitern in verschiedenen Schichttiefen des Kupferstaves möglich. Der so bestimmbare Temperaturgradient gibt die lokale Wärmestromdichte an.

In der Zeichnung sind Ausführungsbeispiele der Erfindung dargestellt. Es zeigen:
- Fig. 1: eine schematische Darstellung des Querschnitts durch die Wandung eines Elektrolichtbogenofens,
- Fig. 2: in der Darstellung gemäß Fig. 1 eine erste alternative Ausführungsform der Erfindung und
- Fig. 3: in der Darstellung gemäß Fig. 1 eine zweite alternative Ausführungs- form der Erfindung.

In den Figuren sind Querschnitte durch die Wandung eines Elektrolichtbogenofens zu sehen. Die Wandungen 1 haben jeweils eine Heißseite 2, die vorliegend als Kupferplatte ausgeführt ist. Die Heißseite 2 ist dem Inneren des Ofens zugewandt. Nach außen begrenzt wird die Wandung 1 durch eine Kaltseite 3, d. h. durch ein plattenförmiges Bauteil, das die Außenseite des Ofens bildet (das Bauteil kann insoweit als Abdeckplatte angesprochen werden). Zur Kühlung der Wandung 1 ist im Inneren der Wandung ein durchströmter Raum 4 ausgebildet, der von einem Kühlmittel (Kühlwasser) durchströmt werden kann. Dies ist an sich bekannt, wobei insbesondere auf die EP 1 600 717 B1 der Anmelderin ausdrücklich Bezug genommen wird.

Zur direkten und präzisen Erfassung der Temperatur der Wandung 1 ist in diese ein Sensorelement 5 in Form eines Lichtwellenleiters integriert, d. h fest mit der Wandung 1 verbunden, und zwar mit der Heißseite 2 derselben.

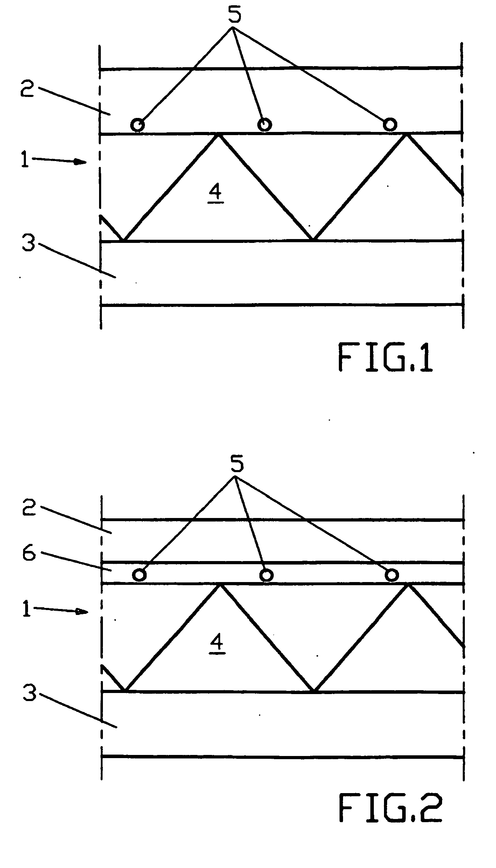

Gemäß Fig. 1 ist die Heißseite 2 mit Bohrungen versehen, in die der Lichtwellenleiter 5 eingeführt ist.

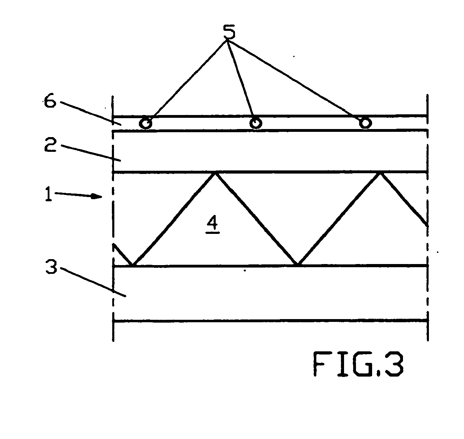

Bei den Lösungen gemäß der Figuren 2 und 3 ist vorgesehen, dass die Heißseite 2 mit einer Schicht 6 beschichtet ist, z. B. und bevorzugt auf galvanischem Wege, wobei der Lichtwellenleiter 5 durch die Schicht 6 vollständig ummantelt und fest mit der Heißseite 2 verbunden wird.

Wie in Fig. 2 gesehen werden kann, ist diese Schicht 6 hier an der vom Inneren des Ofens abgewandten Seite der Heißseite 2 angeordnet. Allerdings kann - wie es Fig. 3 zeigt - auch vorgesehen sein, dass die Schicht 6 dem Ofeninneren zugewandt ist.

Die Lichtwellenleiter 5 bestehen aus einer Grundfaser, die eine Dicke im Bereich zwischen ca. 100 bis 150 µm aufweist. Sofern der Lichtwellenleiter in einem Hüllrohr angeordnet ist, weist dieses zumeist einen Durchmesser von ca. 800 bis 2.000 µm auf. Dementsprechend ergibt sich die Schichtdicke, wobei bereits eine Dicke derselben von ca. 200 bis 250 µm ausreichend sein kann. Als Material für die galvanisierte Schicht 6 hat sich Kupfer, Chrom oder Nickel bewährt.

Nicht näher dargestellt ist eine weitere bevorzugte Möglichkeit, nach der der Lichtwellenleiter 5 in eine Nut in der Heißseite 2 eingelegt wird, die dann wieder verschlossen wird.

Der Lichtwellenleiter 5 kann dabei mäanderförmig auf der Heißseite 2 verlegt werden, so dass die Fläche bezüglich der Temperaturentwicklung gut überwacht werden kann.

Der Lichtwellenleiter besteht also aus einer Grundfaser, die mit oder ohne Hüllrohr in vorher erstellte Bohrungen oder Nuten in der Heißseite eingefasst oder in eine Schicht 6 eingebunden werden kann. Die Messfaser kann dabei Temperaturen bis zu 600 °C Dauerbelastung problemlos ertragen.

Um die Robustheit der Signalübertragung zu erhöhen, werden die Lichtwellen über sog. Linsenstecker von dem Gehäuse des metallurgischen Gefäßes (Lichtbogenofen, SAF, Gießpfanne, Zwischenbehälter etc.) in der jeweiligen Ruheposition zu einer Auswerteeinheit geführt (s. unten).

Die als Bestandteil des Temperatursensors fungierende Glasfaser ist mit einem nicht dargestellten Temperaturerfassungssystem verbunden. Mittels des Erfassungssystems wird Laserlicht erzeugt, das in den Lichtwellenleiter 5 eingespeist wird. Die von der Lichtwellenleitfaser 5 gesammelten Daten werden mittels des Erfassungssystems in Temperaturen umgerechnet und den verschiedenen Messorten zugeordnet. Die Auswertung kann beispielsweise nach dem sog. Faser-Bragg-Gitter-Verfahren (FBG-Verfahren) erfolgen. Hierbei werden geeignete Lichtwellenleiter verwendet, die Messstellen mit einer periodischen Variation des Brechungsindexes bzw. Gitters mit solchen Variationen eingeprägt bekommen. Diese periodische Variation des Brechungsindexes führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Signale der unterschiedlichen Messstellen können dann aufgrund von Laufzeitunterschieden voneinander unterschieden werden. Der detailierte Aufbau solcher Faser-Bragg-Gitter sowie die entsprechenden Auswerteeinheiten sind allgemein bekannt. Die Genauigkeit der Ortsauflösung ist durch die Anzahl der eingeprägten Messstellen gegeben. Die Größe einer Messstelle kann beispielsweise im Bereich von 1 mm bis 5 mm liegen.

Alternativ kann zur Messung der Temperatur auch das "Optical-Frequency-Domain-Reflectometry"-Verfahren (OFDR-Verfahren) oder das "Optical-Time-Domain-Reflectometry"-Verfahren (OTDR-Verfahren) eingesetzt werden. Diese Verfahren basieren auf dem Prinzip der faseroptischen Ramanrückstreuung, wobei ausgenutzt wird, dass eine Temperaturveränderung am Punkt eines Lichtleiters eine Veränderung der Ramanrückstreuung des Lichtwellenleitermaterials verursacht. Mittels der Auswerteeinheit (z. B. einem Raman-Reflektometer) können dann die Temperaturwerte entlang einer Faser ortsaufgelöst bestimmt werden, wobei bei diesem Verfahren über eine bestimmte Länge des Leiters gemittelt wird. Diese Länge beträgt ca. einige Zentimeter. Die verschiedenen Messstellen werden wiederum durch Laufzeitunterschiede voneinander getrennt. Der Aufbau solcher Systeme zur Auswertung nach den genannten Verfahren ist allgemein bekannt, ebenso wie die nötigen Laser, die das Laserlicht innerhalb des Lichtwellenleiters 5 erzeugen.

### Bezugszeichenliste:

- 1: Wandung
- 2: Heißseite
- 3: Kaltseite
- 4: durchströmter Raum
- 5: Sensorelement (Lichtwellenleiter)
- 6: Schicht

## Patentansprüche

1. Metallurgisches Gefäß, insbesondere Schmelzofen, das mindestens eine Wandung (1) umfasst, wobei die Wandung (1) eine dem Inneren des Gefäßes zugewandte Heißseite (2) sowie eine dem Äußeren des Gefäßes zugewandte Kaltseite (3) umfasst, wobei zwischen der Heißseite (2) und der Kaltseite (3) ein von einem Kühlmittel zumindest teilweise durchströmter Raum (4) angeordnet ist und wobei die Wandung (1) zumindest ein Sensorelement (5) umfasst, mit dem die Temperatur mindestens einer Stelle der Wandung (1) ermittelt werden kann,
und
dass das Sensorelement (5) mindestens einen Lichtwellenleiter umfasst,
**dadurch gekennzeichnet, dass**
der Lichtwellenleiter an der Heißseite (2) der Wandung (1) befestigt ist, die Heißseite (2) eine Platte aus Kupfer oder aus einer Kupferlegierung umfasst; und der Lichtwellenleiter (5) zumindest teilweise In einer galvanischen Schicht (6) angeordnet ist, die an der Heißseite (2) angeordnet ist.

2. Metallurgisches Gefäß nach Anspruch 1,
**dadurch gekennzeichnet,**
**dass** der Lichtwellenleiter (5) In Bohrungen In der Heißseite (2) angeordnet ist.

3. Metallurgisches Gefäß nach Anspruch 1,
**dadurch gekennzeichnet,**
**dass** der Lichtwellenleiter (5) in einer Nut In der Heißseite (2) angeordnet ist.

4. Metallurgisches Gefäß nach Anspruch 1,
**dadurch gekennzeichnet,**
**dass** der Lichtwellenleiter (5) vollständig vom Material der Schicht (6) umgeben ist.

5. Metallurgisches Gefäß nach einem der Ansprüche 1 bis 4,
**dadurch gekennzeichnet,**
**dass** die Schicht auf der dem Inneren des metallurgischen Gefäßes zugewandten Seite der Heißseite (2) angeordnet ist.

6. Metallurgisches Gefäß nach einem der Ansprüche 1 bis 5,
**dadurch gekennzeichnet,**
**dass** der Lichtwellenleiter (5) in einem diesen umgebenden Rohr angeordnet ist.

7. Metallurgisches Gefäß nach einem der Ansprüche 1 bis 6,
**dadurch gekennzeichnet,**
**dass** es ein Schmelzofen, insbesondere ein Elektrolichtbogenofen, ist.

8. Metallurgisches Gefäß nach einem der Ansprüche 1 bis 7,
**dadurch gekennzeichnet,**
**dass** der mindestens eine Lichtwellenleiter (6) mäanderformig in der Heißseite (2) der Wandung (1) verlegt ist.

9. Metallurgisches Gefäß nach einem der Ansprüche 1 bis 8,
**dadurch gekennzeichnet,**
**dass** mindestens zwei parallel zueinander verlaufende Lichtwellenleiter (5) in unterschiedlichen Abständen von der Oberfläche der Heißseite (2) verlegt sind.

## Claims

1. Metallurgical vessel, particularly smelting furnace, which comprises at least one wall (1), wherein the wall (1) comprises a hot side (2) facing the interior of the vessel and a cold side (3) facing the exterior of the vessel, wherein a space (4) flowed through at least in part by a coolant is arranged between the hot side (2) and the cold side (3) and wherein the wall (1) comprises at least one sensor element (5) by which the temperature of at least one place of the wall (1) can be detected, and the sensor element (5) comprises at least one optical waveguide, **characterised in that** the optical waveguide is fastened to the hot side (2) of the wall (1), which hot side (2) comprises a plate of copper or of a copper alloy, and the optical waveguide (5) is arranged at least partly in a plated layer (6) arranged at the hot side (2).

2. Metallurgical vessel according to claim 1, **characterised in that** the optical waveguide (5) is arranged in bores in the hot side (2).

3. Metallurgical vessel according to claim 1, **characterised in that** the optical waveguide (5) is arranged in a groove in the hot side (2).

4. Metallurgical vessel according to claim 1, **characterised in that** the optical waveguide (5) is completely surrounded by the material of the layer (6).

5. Metallurgical vessel according to any one of claims 1 to 4, **characterised in that** the layer is arranged on the side of the hot side (2) facing the interior of the metallurgical vessel.

6. Metallurgical vessel according to any one of claims 1 to 5, **characterised in that** the optical waveguide (5) is arranged in a tube surrounding this.

7. Metallurgical vessel according to any one of claims 1 to 6, **characterised in that** it is a smelting furnace, particularly an electric arc furnace.

8. Metallurgical vessel according to any one of claims 1 to 7, **characterised in that** the at least one optical waveguide (5) is placed in meander-form in the hot side (2) of the wall (1).

9. Metallurgical vessel according to any one of claims 1 to 8, **characterised in that** at least two optical waveguides (5) extending parallelly to one another are placed at different spacings from the surface of the hot side (2).

## Revendications

1. Récipient métallurgique, en particulier four de fusion, qui comprend au moins une paroi (1), ladite paroi (1) comportant un côté chaud (2) tourné vers l'intérieur du récipient et un côté froid (3) tourné vers l'extérieur du récipient, dans lequel un espace (4) au moins partiellement traversé par un agent de refroidissement est ménagé entre le côté chaud (2) et le côté froid (3) et dans lequel la paroi (1) comprend au moins un élément capteur (5) au moyen duquel la température d'au moins un emplacement de la paroi (1) peut être déterminée, et
dans lequel l'élément capteur (5) comprend au moins un guide d'ondes lumineuses,
**caractérisé en ce que**
le guide d'ondes lumineuses est fixé sur le côté chaud (2) de la paroi (1), le côté chaud (2) comprend une plaque en cuivre ou en alliage de cuivre, et le guide d'ondes lumineuses (5) est agencé au moins partiellement dans une couche galvanique (6) qui est agencée sur le côté chaud (2).

2. Récipient métallurgique selon la revendication 1, **caractérisé en ce que** le guide d'ondes lumineuses (5) est agencé dans des perçages dans le côté chaud (2).

3. Récipient métallurgique selon la revendication 1,
**caractérisé en ce que** le guide d'ondes lumineuses (5) est agencé dans une rainure dans le côté chaud (2).

4. Récipient métallurgique selon la revendication 1,
**caractérisé en ce que** le guide d'ondes lumineuses (5) est entièrement entouré par le matériau de la couche (6).

5. Récipient métallurgique selon l'une des revendications 1 à 4,
**caractérisé en ce que** la couche est agencée sur la face du côté chaud (2) tournée vers l'intérieur du récipient métallurgique.

6. Récipient métallurgique selon l'une des revendications 1 à 5,
**caractérisé en ce que** le guide d'ondes lumineuses (5) est agencé dans un tube qui l'entoure.

7. Récipient métallurgique selon l'une des revendications 1 à 6,
**caractérisé en ce qu'**il est un four de fusion, en particulier un four à arc électrique.

8. Récipient métallurgique selon l'une des revendications 1 à 7,
**caractérisé en ce que** ledit au moins un guide d'ondes lumineuses (5) est posé sous forme de méandres dans le côté chaud (2) de la paroi (1).

9. Récipient métallurgique selon l'une des revendications 1 à 8,
**caractérisé en ce qu'**au moins deux guides d'ondes lumineuses (5) s'étendant parallèlement l'un à l'autre sont posés à des distances différentes de la surface du côté chaud (2).
